# EUROPÄISCHE PATENTSCHRIFT

(11) **EP 0 457 006 B1**
(45) Veröffentlichungstag und Bekanntmachung des Hinweises auf die Patenterteilung: **02.02.1994**
(21) Anmeldenummer: 91104983.1
(22) Anmeldetag: 28.03.1991
(51) Int. Cl.: B23Q 3/10, B23Q 15/22, F16M 11/42, B23Q 1/00

(54) **Vorrichtung zur Übergabe von Werkstücken**
Device for transferring work pieces
Dispositif pour le transfert de pièces de travail

(30) Priorität: 15.05.1990 DE 4015553
(43) Veröffentlichungstag der Anmeldung: 21.11.1991
(73) Patentinhaber: Horst Witte Entwicklungs- und Vertriebs-KG, D-21354 Bleckede (DE)
(72) Erfinder: Witte, Horst, W-2122 Bleckede/OT Radegast (DE)
(74) Vertreter: von Raffay, Vincenz, Dipl.-Ing.

(56) Entgegenhaltungen:
- WO-A-86/06053
- DE-B- 2 014 105
- US-A- 3 288 421

## Beschreibung

Die Erfindung betrifft eine Vorrichtung zur Übergabe von Werkstücken mit Unterbau von einem Rüstplatz auf den Meßtisch einer Meßmaschine mit einem fahrbaren, tischförmigen Gestell mit Arbeitsplatte.

Eine derartige Vorrichtung ist grundsätzlich aus der DE-AS 13 01 772 bekannt. Die Arbeitsplatte dieser bekannten Vorrichtung ist höhenverstellbar. Zwischen Arbeitsplatte und Werkstück sind Mittel, die das Werkstück stützen, vorgesehen, durch die eine Neigungsverstellung des Werkstückes möglich ist.

Aus der US-PS 4,374,497 ist ein Tisch zur Abstützung von Werkstücken bekannt, dessen vier Beine teleskopartig verstellbar sind, um die Tischplatte entsprechend zu verstellen. Hierbei handelt es sich um den Tisch einer Werkzeugmaschine, auf dem die Bearbeitung durchgeführt wird.

Höhere gesetzliche Anforderungen und Anforderungen an die Wirtschaftlichkeit, machen es zunehmend erforderlich, Meßmaschinen nicht mehr zum Einrichten zeitaufwendig zu blockieren, sondern die Einrichtung der Werkstücke auf getrennten Rüsttischen vorzunehmen. Es ist dann erforderlich, die vorbereiteten Werkstücke von der Rüstplatte zu dem Meßtisch zu transportieren. Dieses geschieht zweckmäßigerweise mit dem Vorrichtungsunterbau, der beispielsweise aus einer Luftlagerplatte bestehen kann. Diese Luftlagerplatten erzeugen einen dünnen Luftfilm, um sehr geringe Höhen und Neigungsunterschiede im Bereich weniger hundertstel Millimeter auszugleichen und somit ein berührungsloses Gleiten mit geringstem Kraftaufwand zu ermöglichen. Der Meßtisch, d.h. die Meßplatte, besteht aus einem hochwertigen Werkstoff, beispielsweise aus Hartgestein, das nicht beschädigt werden darf. Beim Übergang von dem Rüstplatz auf den Meßtisch müssen Höhen- und Neigungsunterschiede berücksichtigt werden, die allein durch den Unterbau nicht ausgeglichen werden können.

Der Erfindung liegt daher die Aufgabe zugrunde, eine Vorrichtung der eingangs genannten Art zu schaffen, durch die eine einfache und beschädigungslose Übergabe der auf dem Rüsttisch vorbereiteten Werkstücke auf den Meßtisch möglich ist, wobei insbesondere Höhen- und Neigungsunterschiede - auch sehr geringe - zwischen Rüstplatte und Meßplatte ausgeglichen und während der Übergabe ständig nachreguliert werden.

Diese Aufgabe wird durch den Anspruch 1 gelöst. Eine besonders vorteilhafte Ausbildung ist Gegenstand des Anspruches 2.

Erfindungsgemäß wird ein "Wagen" geschaffen, dessen Arbeitsplatte neigungs- und höhenverstellbar ist, um zur Übernahme des aufgerüsteten Werkstückes von der Rüstplatte einerseits und zur Übergabe des übernommenen Werkstückes auf den Meßtisch andererseits, eine Anpassung an Höhe und Neigung der jeweiligen Platte zu ermöglichen. Während der Übergabe des Werkstückes auf die Meßplatte erfolgt ständig eine Nachführung, d.h. eine Angleichung der Neigung und der Höhe, wenn die Meßplatte ihre Lage, sei es noch so geringfügig, ändert. Diese Anpassung erfolgt sehr genau und in sehr kleinen Schritten, damit die Oberfläche insbesondere des Meßtisches nicht beschädigt wird. Diese Anpassung und Nachführung ist dann sehr wichtig, wenn als Unterbau eine Luftlagerplatte verwendet wird, die nur sehr geringe Höhen- und Neigungsdifferenzen überwinden kann.

Vorteilhafte Ausgestaltungen sind Gegenstand der Ansprüche 3 und 4.

Die Stützen, die in vorteilhafter Weise Pendelstützen sind, schaffen drei unabhängig voneinander auf- und abbewegbare Auflagepunkte für die Arbeitsplatte der Vorrichtung. Wenn die Sensoren, die Näherungsschalter, oder entsprechende Einrichtungen, die Höhenlage und die Neigung der Meßtischplatte ertastet haben, werden die Stützen durch ihre Schrittmotoren oder ähnliche Einrichtungen entsprechend auf- und abbewegt, so daß die Arbeitsplatte genau die Höhenlage und die Neigung der Meßtischplatte einnimmt. Wenn dieses geschehen ist, kann das Werkstück mit seinem Unterbau von der Arbeitsplatte auf den Meßtisch "geschoben" werden, wobei während der Übergabe eine ständige Nachregulierung von Neigung und Höhe stattfindet, wenn dieses erforderlich ist. Dieses wird auch als "Nachführung" bezeichnet. Durch drei Auflagepunkte ist eine Höhen- und Neigungsverstellung in den erforderlichen Freiheitsgraden gewährleistet.

Wenn die Vorrichtung so ausgebildet ist, wie in Anspruch 2 angegeben, dann stellen die zwei an einem Auflager vorgesehenen Sensoren oder Näherungsschalter nicht nur die Höhenlage, sondern, bedingt durch ihren Abstand, auch die Neigung des Meßtisches fest, so daß die Neigung der Arbeitsplatte entsprechend eingestellt und nachgeführt werden kann.

Im folgenden wird die Erfindung unter Hinweis auf die Zeichnung anhand eines Ausführungsbeispieles näher erläutert.

Es zeigt:

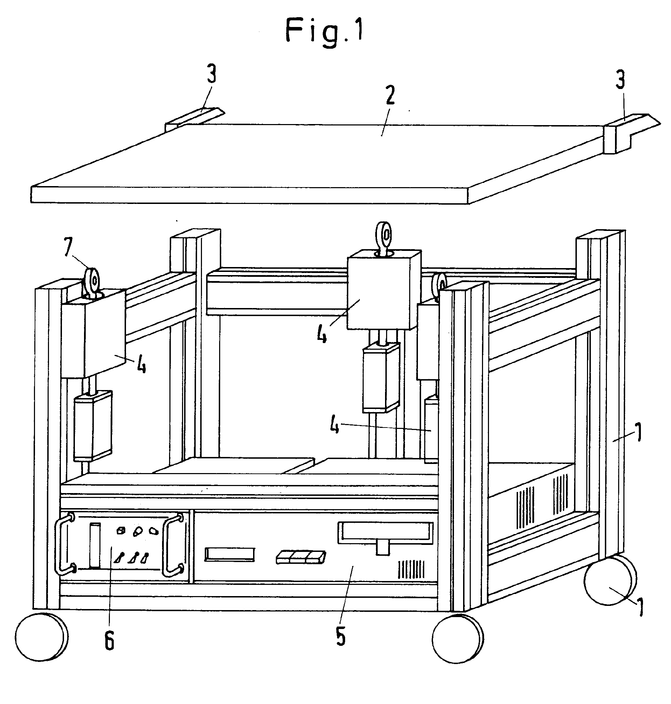

- Fig. 1: eine perspektivische Ansicht einer Ausführungsform nach der Erfindung, bei der die Arbeitsplatte zur besseren Veranschaulichung getrennt dargestellt ist;
- Fig. 2: eine perspektivische Ansicht der Vorrichtung nach der Erfindung vor einer Meßmaschine, mit zwei Einzeldarstellungen I und II im vergrößerten Maßstab;
- Fig. 3: eine schematische Seitenansicht des Rüstplatzes, des Meßtisches und der Vorrichtung nach der Erfindung zur Veranschaulichung der Übergabe; und
- Fig. 4: eine Einzelheit eines Auflagers mit zwei Sensoren.

Die in der Zeichnung dargestellte Vorrichtung zur Übergabe von aufgerüsteten Werkstücken besteht aus einem fahrbaren Gestell 1, durch das eine Art Wagen geschaffen wird. Oben wird dieses Gestell durch eine Arbeitsplatte 2 abgeschlossen, an der zwei Auflager 3 vorgesehen sind. Die Arbeitsplatte liegt auf Pendelstützen 7 auf, die durch Stellmotore mit Schlitten 4 unabhängig voneinander auf- und abverstellbar sind. Die von Sensoren oder Näherungsschaltern an den Auflagern 3 erzeugten Signale werden in einem Rechner 5 mit elektronischen Stellgliedern 6 verarbeitet und an die Schrittmotoren weitergegeben.

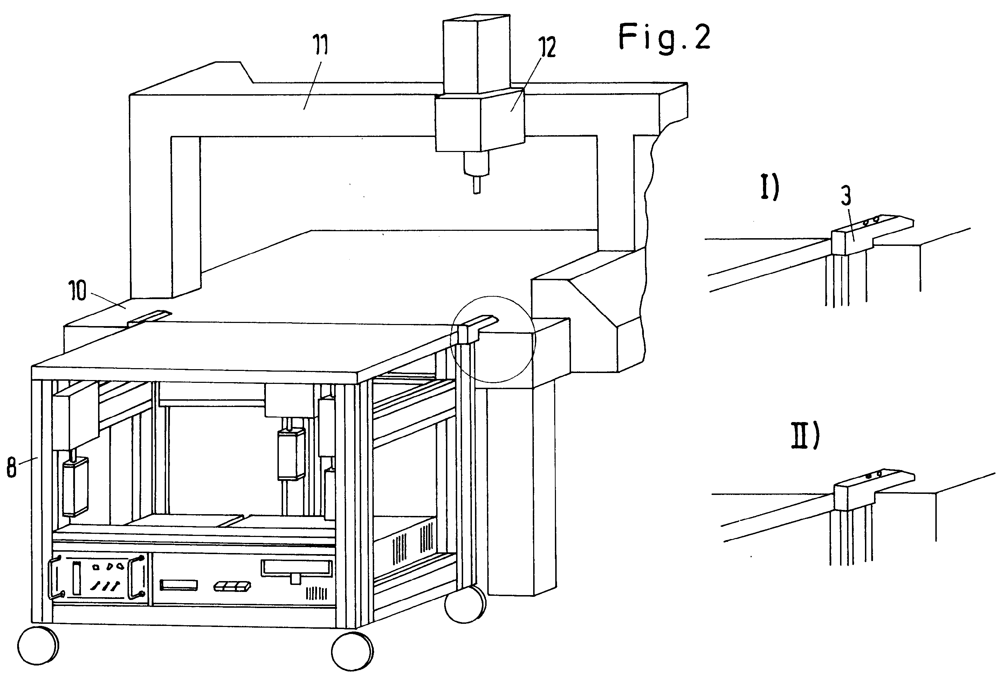

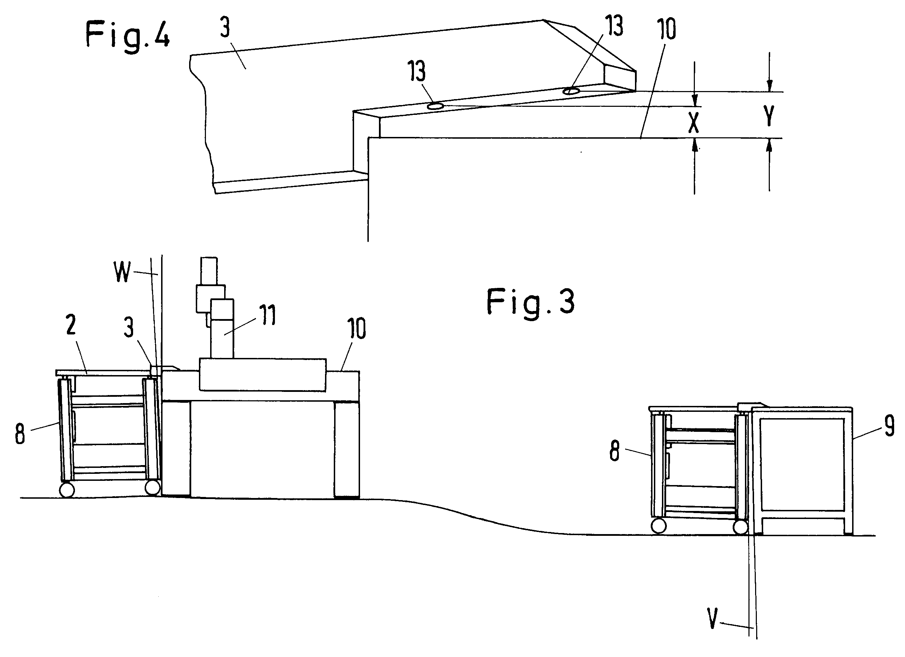

Insbesondere beim Betrachten der Fig. 3 wird deutlich, daß ein Werkstück, das auf einem Rüstplatz 9 aufgerüstet wurde, zu dem Meßtisch 10 mit Meßeinrichtung 12 und Brücke 11 transportiert werden muß, wobei ein Niveauunterschied und unterschiedliche Neigungswinkel V und W berücksichtigt werden müssen. Zur Übernahme des am Rüstlatz 9 aufgerüsteten Werkstückes (nicht gezeigt) ist es erforderlich, die Arbeitsplatte 2 der Vorrichtung 8 auf das Niveau der Rüstplatte zu bringen und die Neigung, bedingt durch den Winkel V, zu berücksichtigen. Zu diesem Zweck werden die Schrittmotoren so betätigt, daß die Auflager 3 glatt und ohne "Knick" auf der Rüstplatte zur Anlage gelangen, d.h. Arbeitsplatte 2 und Rüstplatte liegen auf einem Niveau und exakt in einer Ebene (Winkel von 180°). Entsprechendes gilt für den Meßtisch 10. In Fig. 2 ist in den Einzelheiten I und II dargestellt, wie sich ein Auflager 3 (Einzelheit I) der Platte nähert und schließlich ohne "Knick" zur Anlage gelangt (Einzelheit II). An einem Auflager 3 sind zwei Sensoren oder Näherungsschalter vorgesehen, die einen Abstand voneinander aufweisen, so daß nicht nur die Auflage auf der Platte ertastet und durch ein entsprechendes Signal gemeldet, sondern auch die Neigung festgestellt und durch ein Signal weitergegeben werden kann. Dieses ist in Fig. 4 im einzelnen dargestellt. In Fig. 4 ist ein Auflager 3 im vergrößerten Maßstab oberhalb des Meßtisches 10 dargestellt. Es ist leicht erkennbar, daß nicht nur ein Abstand zwischen dem Meßtisch und dem Auflager vorhanden ist, sondern daß zwischen den entsprechenden Ebenen auch eine Neigung vorhanden ist. Der eine Sensor 13 weist einen Abstand X und der andere einen Abstand Y von der Oberfläche des Meßtisches 10 auf. Dieser unterschiedliche Abstand ist ein Maß für die Neigung, so daß mit Hilfe des Rechners ein Ausgleich erfolgen kann.

Wenn die Arbeitsplatte genau mit der Rüstplatte ausgerichtet ist, kann das aufgerüstete Werkstück beispielsweise mit Hilfe einer Luftlagerplatte auf die Arbeitsplatte geschoben werden. Die Vorrichtung nach der Erfindung wird dann auf dem Fußboden zu der Meßvorrichtung gerollt und überwindet hierbei ein entsprechendes Niveau; auch ändert sich die Neigung, gegebenenfalls durch Fußbodenunebenheiten. Hier wird die Vorrichtung 8 an den Meßtisch herangefahren, wobei die Auflager 3 etwas höher liegen müssen als die Oberfläche des Meßtisches, damit dann ein schrittweises Absenken und Ertasten der Höhe und der Neigung des Meßtisches 10 erfolgen kann. Dieses "Höherlegen" kann durch manuelle Befehle an Rechner und Stellglieder erfolgen. Wenn dieses geschehen ist, d.h. wenn nach Winkel und Höhe eine genaue Ausrichtung zwischen Meßtsich 10 und Arbeitsplatte 2 erfolgt, wird das Werkstück mit seinem Unterbau entsprechend auf den Meßtisch 10 geschoben. Der Meßtisch kann dann zu seinem eigentlichen Zweck, d.h. zum Durchführen der verschiedenen Meßgänge, fortlaufend eingesetzt werden. Er wird nicht durch das zeitaufwendige Rüsten blockiert, das an dem Rüstplatz 9 stattfindet.

## Patentansprüche

1. Vorrichtung zur Übergabe von Werkstücken mit Unterbau von einem Rüstplatz auf den Meßtisch (10) einer Meßmaschine, mit einem fahrbaren, tischförmigen Gestell (1), mit einer Arbeitsplatte (2), die neigungs- und höhenverstellbar auf Stützen (7) gelagert ist, wobei an der Arbeitsplatte im Abstand voneinander zwei Auflager (3) mit Sensoren, Näherungsschaltern (13) od. dgl. zur Auflage auf dem Meßtisch (10) derart vorgesehen sind, daß die Sensoren bei Annäherung von oben an den Meßtisch ihre Signale an einen Rechner zur Steuerung der Auf- und Abbewegung der Stützen (7) sowohl zur Höhen- als auch zur Neigungsveränderung weitergeben.

2. Vorrichtung nach Anspruch 1, dadurch gekennzeichnet, daß an mindestens einem Auflager (3) zwei voneinander entfernt liegende Sensoren, Näherungsschalter (13) od. dgl. zur Ermittlung der Neigung bzw. Neigungsveränderung des Meßtisches (10) vorgesehen sind.

3. Vorrichtung nach Anspruch 1 oder 2, dadurch gekennzeichnet, daß an dem Gestell (1) drei unabhängig voneinander auf- und abbewegbare Stützen (7) vorgesehen sind, auf denen die Arbeitsplatte (2) aufliegt.

4. Vorrichtung nach Anspruch 2 oder 3, dadurch gekennzeichnet, daß die Stützen als Pendelstützen (7) ausgebildet sind, die durch getrennt ansteuerbare Schrittmotoren und Schlitten (4) auf- und abbewegbar sind.

## Claims

1. Device for transferring workpieces with a base from a setting location on the measuring table (10) of a measuring machine, with a movable, table-like frame (1), with a work plate (2), which is adjustable as regards inclination and height and mounted on supports (7), in which on the work plate are provided in spaced manner two bearings (3) with sensors, proximity switches (13) or the like for resting on the measuring table (10), in such a way that the sensors on approaching the measuring table from above transfer their signals to a computer for controlling the upward and downward movement of the supports (7), both for height and for inclination adjustment.

2. Device according to claim 1, characterized in that on at least one bearing (3) are provided two remote sensors, proximity switches (13) or the like for determining the inclination or inclination change of the measuring table (10).

3. Device according to claim 1 or 2, characterized in that on the frame (1) are provided three supports (7), which can be moved up and down independently of one another and on which rests the work plate (2).

4. Device according to claim 2 or 3, characterized in that the supports are constructed as pendulum supports (7), which can be moved up and down by separately controllable stepping motors and slides (4).

## Revendications

1. Dispositif de transfert de pièces avec base d'un poste de réglage à la table de mesure (10) d'une machine de mesure, comprenant un bâti (1) mobile en forme de table, une table de travail (2) qui est montée sur des supports (7) de manière à pouvoir être réglée en inclinaison et en hauteur, deux appuis (3) équipés de capteurs, de détecteurs de proximité (13) ou analogues étant prévus sur la table de travail à distance l'un de l'autre en vue de prendre appui sur la table de mesure (10) de telle manière que lorsqu'ils s'approchent par le haut de la table de mesure, les capteurs transmettent leurs signaux à un calculateur pour commander le mouvement ascendant et descendant des supports (7) afin de modifier aussi bien la hauteur que l'inclinaison.

2. Dispositif selon la revendication 1, **caractérisé** par le fait que deux capteurs, détecteurs de proximité (13) ou analogues éloignés l'un de l'autre sont prévus sur au moins un appui (3) pour déterminer l'inclinaison ou la modification de l'inclinaison de la table de mesure (10).

3. Dispositif selon la revendication 1 ou 2, **caractérisé** par le fait que trois supports (7) pouvant être élevés et abaissés indépendamment les uns des autres sont prévus sur le bâti (1), supports sur lesquels repose la plaque de travail (2).

4. Dispositif selon la revendication 2 ou 3, **caractérisé** par le fait que les supports sont réalisés sous forme de supports oscillants (7) qui peuvent être élevés et abaissés par des moteurs pas à pas et des chariots (4) commandés séparément.
